# EUROPÄISCHE PATENTSCHRIFT

(11) **EP 3 400 162 B1**
(45) Veröffentlichungstag und Bekanntmachung des Hinweises auf die Patenterteilung: **12.02.2020**
(21) Anmeldenummer: 16822928.4
(22) Anmeldetag: 14.12.2016
(51) Int. Cl.: B62D 15/02, G08G 1/16

(54) **VERFAHREN ZUM WIEDERKEHRENDEN EINPARKEN EINES FAHRZEUGS IN EINEN PARKBEREICH ABHÄNGIG VON EINEM ERKENNEN VON OBJEKTEN UNTERSCHIEDLICHER OBJEKTKATEGORIEN, PARKASSISTENZSYSTEM FÜR EIN FAHRZEUG SOWIE FAHRZEUG**
METHOD FOR RECURRENT PARKING OF A VEHICLE IN A PARKING REGION ACCORDING TO AN IDENTIFICATION OF OBJECTS OF DIFFERENT OBJECT CATEGORIES, PARKING ASSISTANCE SYSTEM FOR A VEHICLE AND VEHICLE
PROCÉDÉ DE STATIONNEMENT RÉPÉTÉ D'UN VÉHICULE DANS UNE ZONE DE STATIONNEMENT EN FONCTION D'UNE RECONNAISSANCE D'OBJETS DE DIFFÉRENTES CATÉGORIES D'OBJETS, SYSTÈME D'AIDE AU STATIONNEMENT POUR UN VÉHICULE ET VÉHICULE

(30) Priorität: 08.01.2016 DE 102016100235
(43) Veröffentlichungstag der Anmeldung: 14.11.2018
(73) Patentinhaber: Valeo Schalter und Sensoren GmbH, 74321 Bietigheim-Bissingen (DE)
(72) Erfinder: TCHOUAFFE, Serge, 74321 Bietigheim-Bissingen (DE)
(74) Vertreter: Pothmann, Karsten
(86) Internationale Anmeldenummer: PCT/EP2016/080980
(87) Internationale Veröffentlichungsnummer: WO 2017/118546

(56) Entgegenhaltungen:
- DE-A1-102005 008 874
- DE-A1-102010 023 162
- DE-A1-102011 006 939
- DE-A1-102014 200 611

## Beschreibung

Die Erfindung betrifft ein Verfahren zum wiederkehrenden Einparken eines Fahrzeugs in einen Parkbereich, bei welchem bei einem ersten Einparken in den Parkbereich Umgebungsinformationen des Parkbereichs mit einer Erfassungseinrichtung des Fahrzeugs erfasst werden. Die bei dem ersten Einparken erfassten Umgebungsinformationen werden auf einer Anzeigeeinheit angezeigt. Des Weiteren betrifft die Erfindung auch ein Parkassistenzsystem für ein Fahrzeug als auch ein Fahrzeug mit einem derartigen Parkassistenzsystem.

Aus der DE 10 2010 023 162 A1 ist ein Verfahren zum Unterstützen eines Fahrers eines Kraftfahrzeugs beim Einparken in eine Parklücke mit Hilfe einer Fahrerassistenzeinrichtung des Kraftfahrzeugs bekannt. Dort wird in einem Lernmodus der Fahrerassistenzeinrichtung das Erfassen von Referenzdaten über einen Umgebungsbereich der Parklücke durchgeführt, wobei diese Referenzdaten dann abgespeichert werden. Das Kraftfahrzeug wird dort durch einen Fahrer gesteuert in die Parklücke eingeparkt. Auch wird dann eine erreichte Referenzzielposition erfasst und abgespeichert. In einem nachfolgenden Betriebsmodus wird die Umgebung wiederum erfasst und die jeweils erhaltenen Informationen werden mit den Referenzdaten verglichen, wobei abhängig von dem Vergleich diese vorhergehende Parklücke wiedererkannt wird. Darüber hinaus wird anhand der erfassten Sensordaten eine aktuelle Position des Kraftfahrzeugs relativ zur Referenzzielposition bestimmt und abhängig davon eine Parkbahn festgelegt.

Darüber hinaus ist aus der DE 10 2013 015 349 A1 ein Verfahren und eine Vorrichtung zum Betrieb eines Fahrzeugs bekannt. Dort ist es ermöglicht, ein automatisches Anfahren von Parkplätzen ebenfalls wiederholt durchzuführen. Anhand von bei einem vorhergehenden Anfahren gespeicherten Umgebungsdaten oder Fahrdaten einer Parkzone wird bei einem erneuten Anfahren dieser Parkzone anhand dieser vorhergehenden gespeicherten Umgebungsdaten ein Wiedererkennen der Parkzone ermöglicht. Es wird dann bei dem Identifizieren des Parkplatzes als Heim-Parkplatz die Parkplatzgeometrie und mindestens eine Trajektorie ermittelt und eine Umgebungskarte generiert. Dazu kann beispielsweise mit einem graphischen Bedienelement in einer Anzeige oder aber auch einem manuellen Bedienelement ein befahrbarer Bereich oder die ermittelte Einpark-Trajektorie manuell angepasst werden. Als Editierhilfe können im Lernmodus oder im Betriebsmodus erkannte Hindernisse oder die Freiräume in dieser Umgebungskarte angezeigt werden. Es kann der Fahrer den befahrbaren Bereich dann automatisch oder manuell auf die Freiräume erweitern oder um diese Freiräume reduzieren. Bei dem erstmaligen Anfahren des Heim-Parkplatzes kann durch den Fahrer des Fahrzeugs manuell ein Speichern der Umgebungsdaten oder Fahrdaten ab einem vorgegebenen Merkmal, beispielsweise ab einem vorgegebenen Abstand vor Erreichen der Einfahrt, aktiviert werden. Fährt das Fahrzeug dann nachfolgend den Heim-Parkplatz an, so wird mittels des Umgebungserfassungssystems bei Erkennung eines dieser Merkmale dann automatisch die Speicherung der Umgebungsdaten oder Fahrdaten aktiviert.

DE 10 2014 200 611 A1 offenbart ein Verfahren zur Durchführung eines autonomen Parkvorgangs eines Fahrzeugs. Zwischen einem Mobilgerät eines sich innerhalb oder außerhalb des Fahrzeugs befindenden Bedieners und dem Fahrzeug besteht eine Kommunikationsverbindung, durch welche zumindest ein Befehl zur Aktivierung des autonomen Parkvorgangs des Fahrzeugs übertragen wird. Dabei bewegt sich das Fahrzeug nach der Aktivierung des autonomen Parkvorgangs autonom von einer Startposition zu einer Zielposition.

Bei den bekannten Verfahren ist ein Nachteil darin zu sehen, dass das Wiedererkennen des Parkbereichs, in den bei einem vorhergehenden Einparken eingeparkt wurde, eingeschränkt ist. Die jeweils von dem System selbst erfassten Informationen können diesbezüglich für eine zielsichere Entscheidung zu einem Erkennen eines Parkbereichs für ein wiederkehrendes Einparken unzureichend sein und auch in anderer Art und Weise, beispielsweise bezüglich der Anzahl oder der Relevanz nachteilig sein.

Es ist Aufgabe der vorliegenden Erfindung, ein Verfahren sowie ein Parkassistenzsystem für ein Fahrzeug zu schaffen, bei welchen ein wiederkehrendes Einparken eines Fahrzeugs in einen Parkbereich und somit auch das wiederkehrende Erkennen eines derartigen Parkbereichs verbessert ist.

Diese Aufgabe wird durch ein Verfahren und ein Parkassistenzsystem gemäß den unabhängigen Ansprüchen gelöst. Bei einem erfindungsgemäßen Verfahren zum wiederkehrenden Einparken eines Fahrzeugs in einen Parkbereich wird bei einem ersten Einparken in den Parkbereich bzw. bei einem zu einem ersten Zeitpunkt stattfindenden Einparken in den Parkbereich ein Erfassen von Umgebungsinformationen des Parkbereichs mit einer Erfassungseinrichtung des Fahrzeugs durchgeführt. Die bei dem ersten Einparken erfassten Umgebungsinformationen werden auf einer Anzeigeeinheit angezeigt. Ein wesentlicher Gedanke der Erfindung ist darin zu sehen, dass ein Fahrzeugnutzer aus den angezeigten Umfeldinformationen manuell zumindest ein Objekt aus einer ersten Objektkategorie als den Parkbereich charakterisierende Umfeldinformation auswählt. Zusätzlich oder anstatt dazu ist es vorgesehen, dass der Fahrzeugnutzer aus den angezeigten Umfeldinformationen manuell zumindest ein Objekt aus einer zur ersten unterschiedlichen zweiten Objektkategorie als den Parkbereich charakterisierende Umfeldinformation auswählt. Die ausgewählten Objekte werden abgespeichert. Bei einem dann nachfolgenden Einparken und somit zu einem auf das erste Einparken nachfolgenden wiederkehrenden Einparken und somit zu einem Einparken zu einem zum ersten Zeitpunkt nachfolgenden Zeitpunkt wird abhängig von ausgewählten und abgespeicherten Objekten ein aktuell erfasster Parkbereich als der Parkbereich beim ersten Einparken erkannt. Weiterhin wird beim ersten Einparken in den Parkbereich zumindest ein ortsfestes unbewegbares Objekt angezeigt und dieses Objekt durch Auswählen der ersten Objektkategorie zugeordnet. Es ist vorgesehen, dass eine Anzahl m von Objekten der ersten Objektkategorie durch einen Fahrzeugnutzer ausgewählt und abgespeichert werden, und bei einem, für ein nachfolgendes wiederkehrendes Einparken nachfolgenden Erkennen von maximal m-1 Objekten der ersten Objektkategorie ein Aussagewert dafür bestimmt wird, mit welcher Wahrscheinlichkeit der aktuelle Parkbereich dem Parkbereich beim ersten Einparken entspricht.

Durch die Erfindung wird somit erreicht, dass ein Fahrzeugnutzer selbst entscheiden kann, welche der aufgenommenen Umfeldinformationen den Parkbereich charakterisieren sollen und somit welche entsprechenden Umfeldinformationen für ein späteres Beurteilen herangezogen werden sollen, ob ein dann aktuell erfasster Parkbereich derjenige Parkbereich ist, bei welchem das erste Einparken durchgeführt wurde.

Mit der Erfindung kann somit ein sich mehrmals wiederholendes Einparken in einen Parkbereich verbessert werden. So kann beispielsweise das Einparken in einen eigenen Parkbereich zu Hause oder am Arbeitsplatz verbessert werden. Durch das erfindungsgemäße Verfahren wird in diesem Zusammenhang das immer wieder bzw. wiederholende erfolgende Erkennen eines Parkbereichs sicherer und präziser. Es wird somit insbesondere ermöglicht, dass ein auf ein erstes Einparken hin folgendes weiteres gewünschtes Einparken in einen diesbezüglich gewünschten Parkbereich bei einem wiederkehrenden Einparken auch abhängig von einem Vorhandensein von ausgewählten und abgespeicherten Objekten erkannt werden kann. Eine nutzerseitige Definition und Vorgabe von in dem Zusammenhang entscheidungsrelevanten und somit für das Erkennen zugrunde zu legenden Objekten ist in dem Zusammenhang von besonderem Vorteil.

Gerade auch die in dem Zusammenhang vorgenommene Auswahl von Objekten von unterschiedlichen Objektkategorien verbessert die oben genannten Vorteile nochmals.

Insbesondere werden Objekte der ersten Objektkategorie mit einer ersten Vorhandensein-Wahrscheinlichkeit eines dauerhaften Vorhandenseins im Parkbereich, insbesondere an der detektierten Stelle beim ersten Einparken, versehen. Insbesondere werden Objekte der zweiten Objektkategorie mit einer zweiten Vorhandensein-Wahrscheinlichkeit eines dauerhaften Vorhandenseins im Parkbereich, insbesondere an der detektierten Stelle beim ersten Einparken, versehen. Dadurch können den Objekten unterschiedliche Bedeutungen für die Beurteilung bei einem auf das ersten Einparken nachfolgendem Einparken und einem somit dem vorausgehenden Wiedererkennen eines Parkbereichs zugeschrieben werden.

Im Hinblick auf das dauerhafte Vorhandensein ist insbesondere die Situation beurteilt, bei welcher das Objekt auch bei zukünftigem wiederkehrenden Einparken dort zu erwarten ist. Diese Erwartung ist unterschiedlich und wir durch die Vorhandensein-Wahrscheinlichkeit ausgedrückt.

Es können auch mehr als zwei unterschiedliche Objektkategorien definiert werden und jeweils, wenn bei einem ersten Einparken vorhanden, dann entsprechende Objekte dann entsprechend zugeordnet werden.

Objektkategorien können nach Größenvorgaben charakterisierend sein. So können in dem Zusammenhang kleinere bzw. niedrigere Objekte in eine Objektkategorie klassifiziert werden, Objekte, die gegenüber einem vorgebbaren Höhenschwellwert größere Höhen aufweisen und/oder die gegenüber Breitengrenzwerten größere Breiten aufweisen, können dann in eine dazu unterschiedliche zweite Objektkategorie klassifiziert werden. Da das Erkennen von unterschiedlich großen Objekten durch unterschiedliche Situationen erschwert sein kann, kann durch eine individuelle Nutzerauswahl von entsprechend großen oder kleinen Objekten und die in dem Zusammenhang dann vorliegenden unterschiedlichen Objektkategorien bedarfsgerecht die Detektion verbessert werden. Damit wird dann auch das nachfolgende Erkennen dieses Parkbereichs für ein wiederkehrendes Einparken verbessert.

Ebenso können Objektkategorien anderweitig klassifiziert werden. So kann eine Objektkategorie Pflanzen wie Bäume, Sträucher oder Blumen und dergleichen umfassen. Eine dazu unterschiedliche Objektkategorie kann dann beispielsweise Gebäude, wie beispielsweise eine Hundehütte oder ein Mülltonnenhäuschen oder einen Streugutbehälter oder als Gartenhaus oder dergleichen aufweisen.

Es ist vorgesehen, dass die Objektkategorien bezüglich bewegbaren und unbewegbaren Objekten unterschieden werden, so dass beim ersten Einparken in den Parkbereich zumindest ein ortsfestes unbewegbares Objekt angezeigt wird und dieses Objekt durch Auswählen der ersten Objektkategorie zugeordnet wird. Ein ortsfestes unbewegbares Objekt ist somit insbesondere als derartiges Objekt zu verstehen, welches fest mit dem Boden verbunden ist und beispielsweise eine Mauer oder eine Straßenlaterne oder ein Pflock oder dergleichen ist. Diese spezifischen Objekte sind dahingehend von besonderer Vorteilhaftigkeit, da sie sich nicht ohne Weiteres selbst fortbewegen können oder reversibel durch eine Person entfernt oder wieder hingebracht werden können. Da gerade derartige unbewegbare Objekte mit hoher Wahrscheinlichkeit dauerhaft an ihrem Ort verbleiben, markieren sie besonders hervorzuhebende Objekte, die bei einem wiederkehrenden Einparken dann auch quasi immer als vorhanden angenommen werden können. Sie ermöglichen daher eine hohe Aussagekraft, dass der aktuell detektierte Parkbereich der Parkbereich wie beim ersten Einparken ist, wenn bei dem aktuellen Erfassen für ein wiederkehrendes Einparken dann zumindest eines dieser Objekte der ersten Objektkategorie detektiert wird.

Darüber hinaus können als weitere Beispiele derartiger ortsfester, unbewegbarer Objekte auch Pflanzen, wie im Boden eingepflanzte Bäume und Sträucher, angesehen werden.

Es ist darüber hinaus auch möglich, dass bei derartigen ortsfesten unbewegbaren Objekten eine Prioritätenliste bereitgestellt wird, welche dahingehend erstellt wird, dass die jeweiligen Objekte in der Liste bei unterschiedlichem Veränderungsgrad erhalten bleiben. Dies bedeutet insbesondere, dass beispielsweise ein Gebäude mit geringster Wahrscheinlichkeit verändert wird, insbesondere im Hinblick auf die Ausmaße oder eine farbliche Erscheinung. Demgegenüber können beispielsweise Pflanzen, wie Bäume, beim Wachsen im Frühjahr und Sommer ein anderweitiges Aussehen und eine anderweitige Größe als im Herbst haben. In dem Zusammenhang kann ein jahreszeitenbedingter Unterschied in der Erscheinung auftreten. Auch kann ein Unterschied dahingehend auftreten, dass eine derartige Pflanze einen Zuschnitt erfahren hat, und in dem Zusammenhang dann Äste und/oder Blätter fehlen. Dennoch kann dann auch bei diesen Objekten mit noch entsprechender Wahrscheinlichkeit das Erkennen vorliegen, indem bei einer vorteilhaften Ausführen der Erfindung auch ein gewisses Toleranzmaß bezüglich dem Erscheinungsbild von derartig konkreten ortsfesten unbewegbaren Objekten zugrunde gelegt wird. Bezüglich der oben genannten Prioritätenliste kann dann vorgesehen sein, dass beispielsweise Pflanzen in der Prioritätenliste weiter hinten aufgelistet sind, als beispielsweise Gebäude.

Es wird vorgesehen, dass eine Anzahl m von Objekten der ersten Objektkategorie durch einen Fahrzeugnutzer ausgewählt und abgespeichert werden, und bei einem, für ein nachfolgendes wiederkehrendes Einparken nachfolgenden Erkennen von maximal m-1 Objekten der ersten Objektkategorie ein Aussagewert dafür bestimmt wird, mit welcher Wahrscheinlichkeit der aktuelle Parkbereich dem Parkbereich beim ersten Einparken entspricht. Bei dieser vorteilhaften Ausführung wird also dann, wenn nicht alle ausgewählten und abgespeicherten Objekte bei einem für ein nachfolgendes wiederkehrendes Einparken vorgesehenen Erkennungsvorgang des Parkbereichs vorhanden sind oder erkannt werden, dennoch angenommen werden kann, dass es sich um diesen entsprechenden Parkbereich handelt, wenn in dem Zusammenhang eine reduzierte Anzahl von derartigen Objekten der ersten Objektkategorie erkannt werden. Damit wird verhindert, dass dann, wenn nicht alle Objekte erkannt werden oder eines der ausgewählten und abgespeicherten Objekte tatsächlich nicht mehr vorhanden ist, weil es beispielsweise abgerissen wurde oder anderweitig entfernt wurde, verworfen wird, dass der aktuelle Parkbereich dem Parkbereich beim ersten Einparken entspricht.

Insbesondere wird dann bei dieser Bestimmung des Aussagewerts ein Vergleich mit einem Aussagegrenzwert durchgeführt und der aktuell erfasste Parkbereich als der Parkbereich beim ersten Einparken erkannt, wenn der bestimmte Aussagewert größer dem Aussagegrenzwert ist.

So kann es vorgesehen sein, dass der Aussagewert größer einem Aussagegrenzwert ist, wenn maximal eine Anzahl I ≥ 1 fehlt. Diese Anzahl I kann situationsbedingt unterschiedlich sein. So kann es vorgesehen sein, dass diese Anzahl I abhängig von der Anzahl m vorgegeben wird. Dies bedeutet, dass dann, wenn die Anzahl m relativ groß ist, beispielsweise größer 5 ist, auch die Anzahl I größer als 1 sein kann, beispielsweise 1, 2 oder 3 sein kann, um dann dennoch einen Aussagewert zu erhalten, der größer einem Aussagegrenzwert ist. Zusätzlich oder anstatt dazu kann auch vorgesehen sein, dass die Anzahl I davon abhängt, welche Objekte einer ersten Objektkategorie ausgewählt und abgespeichert wurden. In dem Zusammenhang kann dann wiederum auf die Prioritätenliste zugegriffen werden. So kann beispielsweise vorgesehen sein, dass dann, wenn Gebäude als derartige Objekte der ersten Objektkategorie ausgewählt wurden, der Aussagewert stärker sinkt bzw. bei einer kleineren Anzahl I der Aussagewert kleiner als einem Aussagegrenzwert ist als dies beispielsweise bei Pflanzen dann der Fall ist. Dies hat den Hintergrund, dass die Wahrscheinlichkeit, dass ein Gebäude abgerissen wurde oder eine Mauer abgerissen wurde, als geringer angesehen wird, als dass eine Pflanze entfernt wurde.

Es kann auch vorgesehen sein, dass in einer weiteren sehr vorteilhaften Ausführung beim ersten Einparken im Parkbereich zumindest ein bewegbares Objekt angezeigt wird und dieses Objekt durch Auswählen der zweiten Objektkategorie zugeordnet wird. Als bewegbares Objekt wird in dem Zusammenhang ein derartiges angesehen, welches zerstörungsfrei lösbar von dem momentanen Ort im Parkbereich entfernt werden kann und wieder dorthin verbracht werden kann. Dies können reversibel bewegbare Objekte sein, die schiebbar oder tragbar sind. So kann in dem Zusammenhang als entsprechend bewegbares Objekt ein Fahrrad oder ein Motorrad oder ein Anhänger angesehen werden. Ebenso kann in dem Zusammenhang jedoch beispielsweise auch eine Mülltonne vorgesehen sein. Bewegbare Objekte können jedoch auch tragbare Blumenkästen oder eine Gartenschlauchrolle oder dergleichen sein.

Die jeweils genannten konkreten Beispiele sind nicht als abschließend zu verstehen und können individuell und vielfältig ergänzt werden.

Es ist auch darauf hinzuweisen, dass sowohl bei den unbewegbaren Objekten als auch bei den bewegbaren Objekten nicht nur mit dem Boden in Kontakt befindliche Objekte zu verstehen sind, sondern dass in dem Zusammenhang auch natürlich anderweitige Objekte vorhanden sein können. So kann beispielsweise eine Außenleuchte an einer Wand als ein entsprechendes Objekt insbesondere als unbewegbares Objekt angesehen werden. Auch ein Balkon oder eine sonstige Verkleidung an einem Gebäude kann ein derartiges unbewegbares Objekt sein. Darüber hinaus kann ein bewegbares Objekt auch vom Boden beanstandet sein.

Insbesondere ist bei einer vorteilhaften Ausführung vorgesehen, dass bei ausgewählten Objekten, die von dem Fahrzeugnutzer einer spezifischen Objektkategorie zugeordnet wurden und bei deren nachfolgendem Erkennen bezüglich der korrekten Objektkategorie keine eindeutige Zuordnung möglich ist, das System diese Objekte dann unberücksichtigt lassen kann. Es kann alternativ jedoch auch vorgesehen sein, dass ein derartiges Objekt bei einem dann Erkennen für ein wiederkehrendes Einparken jedoch nachrangig herangezogen wird und zunächst gesucht wird, ob weitere Objekte erkannt werden, deren Zuordnung und somit Erkennung sicherer ist. Ist dies gegeben, so können dann die nachrangig eingestuften Objekte unberücksichtigt bleiben oder berücksichtigt werden, jedoch mit einer geringeren Gewichtung und somit insbesondere einem geringeren Beitrag zu einem Aussagewert.

Bei einer vorteilhaften Ausführung wird vorgesehen, dass eine Anzahl n von Objekten der zweiten Objektkategorie ausgewählt und abgespeichert wird, und bei einem, für ein nachfolgendes wiederkehrendes Einparken nachfolgenden Erkennungsvorgang bzw. ein Erkennen von maximal n-1 Objekten der zweiten Objektkategorie ein Aussagewert dafür bestimmt wird, mit welcher Wahrscheinlichkeit der aktuelle Parkbereich dem Parkbereich beim ersten Einparken entspricht. Insbesondere wird auch hier ein Aussagewert abhängig von der Anzahl der fehlenden Objekte und/oder abhängig von der Art der fehlenden Objekte und/oder abhängig vom Typ einer Art der fehlenden Objekte bestimmt. Dies bedeutet, dass je höher die Anzahl der fehlenden Objekte ist, je geringer der Aussagewert ist. Darüber hinaus kann zusätzlich oder anstatt dazu auch vorgesehen sein, dass eine Prioritätenliste bezüglich der Art der Objekte aufgestellt wird. So kann vorgesehen sein, dass die Wahrscheinlichkeit, dass beispielsweise bei einem Fahrrad als eine beispielhafte Art eines bewegbaren Objekts bezüglich einem möglichen Fehlen größer ist, als bei einem als weitere Art eines bewegbaren Objekts kategorisierten Blumenkasten oder einer Mülltonne. Dies bedeutet, dass in der Praxis die Wahrscheinlichkeit, dass ein Fahrrad genutzt wird oder entfernt wird und somit bei einem wiederkehrenden Einparken momentan nicht im Parkbereich vorhanden ist, größer eingeschätzt wird, als dies für einen Pflanzkasten oder einen Blumenkasten oder eine Mülltonne angenommen wird.

Dies kann auch abhängig davon sein, wo ein derartiges Objekt üblicherweise örtlich im Parkbereich positioniert ist und wo es bei der Erfassung beim ersten Einparken steht. So kann es beispielsweise der Fall sein, dass beim ersten Einparken die Mülltonne an einer Grundstückseinfahrt im Parkbereich, die an eine öffentliche Straße mündet steht, da die Mülltonne an diesem Tag geleert wird. Somit ist hier eine Situation gegeben, bei welcher die Wahrscheinlichkeit, dass bei einem wiederkehrenden Einparken die Mülltonne wieder an dieser Stelle steht, geringer, als dass sie an ihrer eigentlich üblichen Position ist, wenn keine Entleerung ansteht. Bei dieser Situation, wenn dann der Fahrzeugnutzer dennoch diese Mülltonne als charakterisierendes Objekt auswählt, ist dann die Wahrscheinlichkeit einer Wiederdetektion kleiner als beispielsweise bei einem Fahrrad, welches beim ersten Einparken an seiner üblichen Parkstelle im Parkbereich positioniert ist.

Darüber hinaus kann auch vorgesehen sein, dass zusätzlich oder anstatt dazu als Art eines Objekts alle mit Rädern ausgestatteten Objekte angesehen werden. So können in dem Zusammenhang beispielsweise Fahrräder als erster Typ einer derartigen Art, Motorräder als zweiter Typ einer derartigen Art und ein Anhänger als dritter Typ einer derartigen Art angesehen werden. Auch hier ist die Nennung der konkreten Beispiele nicht abschließend zu verstehen und soll lediglich die Begrifflichkeiten einer Art eines Objekts und eines Typs einer Art eines Objekts verdeutlichen.

Bei einer vorteilhaften Ausführung wird vorgesehen, dass bei einem für ein nachfolgendes wiederkehrendes Einparken nachfolgenden Erkennen eines Objekts der zweiten Objektkategorie an einer zu der Position beim ersten Einparken unterschiedlichen Position und/oder bei einer Veränderung einer Anzahl von Objekten an einer Position eines ausgewählten Objekts der zweiten Objektkategorie ein Aussagewert dafür bestimmt wird, mit welcher Wahrscheinlichkeit der aktuelle Parkbereich dem Parkbereich beim ersten Einparken entspricht, wobei der Aussagewert abhängig von der Größe der Positionsänderung und/oder abhängig von der Anzahl der zusätzlichen Objekte an der Position bestimmt wird. Dies ist gerade für bewegbare Objekte ein großer Vorteil. Denn so kann es mit hoher Wahrscheinlichkeit vorgesehen sein, dass beispielsweise bei einem Fahrrad ein recht häufiger Gebrauch auftritt und somit eine zumindest geringfügige Positionsänderung bezüglich der jeweiligen Abstellstelle im Parkbereich auftritt. Selbst dann, wenn beispielsweise in einer Garage oder an einer sonstigen Abstellstelle für Fahrräder zu Hause oder in der Arbeit als übliche Abstellstelle vorgesehen ist, können hier dennoch gewisse Positionstoleranzen beim Abstellen auftreten. Da auch in dem Zusammenhang gerade die bewegbaren Objekte erkannt werden, ist es auch wichtig und vorteilhaft ein Erkennen vorzusehen, wenn eine Positionsänderung innerhalb eines Toleranzbereichs aufgetreten ist. Auch kann es vorgesehen sein, dass an einem bestimmten Abstellbereich nicht nur ein Fahrrad, sondern beispielsweise zwei Fahrräder üblicherweise positioniert werden. Sind nun beim ersten Einparken zwei derartige Fahrräder als bewegbare Objekte in einem derartigen Abstellbereich direkt nebeneinander bzw. hintereinander detektiert und ist dann bei einem Erkennen des Parkbereichs zu einem wiederkehrenden Einparken nur eines dieser Fahrräder an der Abstellstelle vorhanden, so kann dennoch mit einer entsprechenden Bestimmung eines Aussagewerts angenommen werden, dass der aktuell erfasste Parkbereich dem Parkbereich beim ersten Einparken entspricht.

Bei einer vorteilhaften Ausführung werden die als den Parkbereich charakterisierenden Objekte diejenigen außerhalb einer Parkzone des Parkbereichs ausgewählt. Der Parkbereich charakterisiert sich somit allgemein dadurch, dass er eine Parkzone aufweist, in der das Fahrzeug dann auch abgestellt werden kann. Die Parkzone weist insbesondere denjenigen Bereich und eine derartige Fläche auf, auf welcher das Fahrzeug mit seiner Größe abgestellt werden kann. In der Parkzone sind somit keine Objekte vorhanden. Bezüglich der Gestaltung des Parkbereichs kann abhängig davon, wo die Parkzone dann positioniert ist, eine individuelle Größe oder Gestalt vorgesehen sein. So kann vorgesehen sein, dass sich der Parkbereich nur relativ geringfügig größer als die Parkzone darstellt und somit unmittelbar angrenzend an die Parkzone entsprechende Objekte vorhanden sind und detektiert werden. Ist jedoch beispielsweise die Parkzone bei einem Wohnhaus innerhalb des Grundstücks und relativ weit von einer in dem Zusammenhang hin mündenden öffentlichen Straße entfernt, so kann sich der Parkbereich zusätzlich zur Parkzone noch relativ weit von dem Grundstück insbesondere bis zu der öffentlichen Straße hin erstrecken. Es können dann auch Objekte vorhanden sein, die ferner zur Parkzone sind, jedoch auf dem Weg von der öffentlichen Straße zur Parkzone angeordnet sind und entsprechend auch durch den Erfassungsbereich detektiert werden können. Somit können für einen Parkbereich alle Objekte zugeordnet werden, die abhängig von dem Bewegungsablauf des Fahrzeugs bis hin zur Parkzone von der Erfassungseinrichtung erfasst werden können.

Insbesondere ist durch die freie Wählbarkeit eines Fahrzeugnutzers von aus seiner Sicht gewünschten und vorteilhaften charakteristischen Umfeldinformationen daher sehr flexibel und variabel möglich, Objekte auszuwählen und abzuspeichern. Da Parkbereiche individuellst ausgestaltet und positioniert sein können, ist es durch die Erfindung von besonderer Vorteilhaftigkeit ermöglicht, den jeweiligen Gegebenheiten gerecht zu werden und dies durch den Fahrzeugnutzer selbst beurteilen zu lassen, so dass jeweils situationsbedingt und individuell die auch dann geeignetsten Objekte für ein nachfolgendes bestmögliches Wiedererkennen des Parkbereichs geschaffen werden.

Bei einer vorteilhaften Ausführung wird vorgesehen, dass das Auswählen eines Objekts durch Antippen auf einer berührsensitiven Bedienoberfläche der Anzeigeeinheit durchgeführt wird. Dadurch ist ein sehr einfaches und nutzerfreundliches Handhaben des Auswahlprozesses erreicht. Es kann insbesondere auch vorgesehen sein, dass hier die Anzeigeperspektive der Objekte auf der Anzeigeeinheit verändert werden kann, so dass auch eine Draufsicht und/oder eine schräge Perspektive erfolgen kann und vorzugsweise der Fahrzeugnutzer zwischen den unterschiedlichen Darstellungen wählen kann. Dadurch kann es ermöglicht werden, dass der Fahrzeugnutzer auch die Sichtweise des Erfassungsbereichs dargestellt bekommt und beispielsweise im Vergleich zu einer Draufsicht dann besser beurteilen kann, ob bei einer Blickperspektive, wie sie die Erfassungseinrichtung hat, ein vermeintlich gutes Objekt auch tatsächlich dann entsprechend hohe Charakterisierungseigenschaften aufweist.

Es kann vorgesehen sein, dass ein Auswählen angezeigt wird, in dem beispielsweise das berührte Objekt bzw. das ausgewählte Objekt kenntlich gemacht wird. Es kann hier eine entsprechende farbliche Kennzeichnung und/oder ein Blinken und/oder eine akustische Bestätigung ausgegeben werden. Damit ist die Sicherheit des Auswählens erhöht.

Bei einer vorteilhaften Ausführung ist vorgesehen, dass die ausgewählten Objekte wieder verändert werden können. So kann bei einem auf einen ersten Auswahl- und Abspeicherprozess nachfolgenden weiteren wiederkehrenden Einparken auf sich, insbesondere dauerhaft, veränderte Umgebungsbedingungen eingegangen werden. So kann beispielsweise dann, wenn ein unbewegbares Objekt unwiederbringbar entfernt wurde, darauf reagiert werden und der Fahrzeugnutzer kann durch einen erneuten Auswahlprozess das diesbezüglich vorher abgespeicherte und ausgewählte Objekt löschen. Er kann dann gegebenenfalls ein weiteres bisher nicht ausgewähltes und abgespeichertes Objekt auswählen und abspeichern.

Ebenso kann in dem Zusammenhang situationsbedingt, beispielsweise aufgrund sich ändernder Objekte beispielsweise wegen Jahreszeitenänderung, eingegangen werden und beispielsweise können für die jeweiligen Jahreszeiten dann die sich diesbezüglich ändernden Objekte neu ausgewählt und abgespeichert werden. Ein sich insbesondere bezüglich der Jahreszeiten veränderndes Objekt kann dann jeweils individuell nochmals ausgewählt und abgespeichert werden, so dass der Erkennungsprozess nochmals verbessert ist.

In einer vorteilhaften Ausführung ist vorgesehen, dass eine bei dem ersten Einparken erreichte Zielposition des Fahrzeugs in einer Parkzone des Parkbereichs abgespeichert wird. Damit wird vorteilhafterweise nicht nur das Erkennen des Parkbereichs als solchen sondern auch das in die Parkzone vorteilhafte Verbringen ermöglicht.

Vorzugsweise wird vorgesehen, dass die Zielposition zusammen mit den abgespeicherten Objekten als Informationscluster, insbesondere als Umfeldkarte, abgespeichert wird. Dadurch wird ein ganzes Bündel an Informationen bereitgestellt um einerseits das hochpräzise und genaue Wiedererkennen eines Parkbereichs zu ermöglichen, andererseits dann bei einem Erkennen eine einmal vorher erreichte, gewünschte und bevorzugte Zielposition wieder zu erlangen.

In einer vorteilhaften Ausführung kann dazu vorgesehen sein, dass auch Fahrtrajektorien in dem Parkbereich bis hin zur Parkzone aufgezeichnet und abgespeichert werden. Es kann vorgesehen sein, dass in dem Zusammenhang mehrere Fahrtrajektorien abgespeichert werden. Ebenso kann es vorgesehen sein, dass bei einem wiederkehrenden Einparken eine beim ersten Einparken abgespeicherte Fahrtrajektorie verändert wird. Die Veränderung kann dahingehend erfolgen, dass der Weg bis zur Zielposition geändert wird und die Zielposition jedoch gleich bleibt. Es kann jedoch auch ermöglicht sein, dass der Weg bis zur Zielposition als auch die Zielposition selbst gegenüber dem ersten Einparken verändert wird. So kann insbesondere darauf reagiert werden, wenn sich vorzugsweise bewegbare Objekte ihrer Position gegenüber dem ersten Einparken verändert haben und somit die Parkzone in ihrer Größe verändert hat und/oder der Weg zur Parkzone im Parkbereich sich verändert hat und die ursprüngliche Zielposition, die beim ersten Einparken erreicht wurde, nicht mehr möglich wäre, jedoch eine andere Zielposition in der Parkzone dennoch möglich ist.

In einer vorteilhaften Ausführungsform ist es vorgesehen, dass beim Erkennen des aktuell erfassten Parkbereichs als den Parkbereich beim ersten Einparken das Fahrzeug zumindest semi-autonom in die Zielposition gebracht wird. Die Zielposition kann in dem Zusammenhang die beim ersten Einparken bestimmte und abgespeicherte Zielposition sein, kann jedoch aber auch eine andere und aktuell individuell bestimmte Zielposition sein.

Vorzugsweise ist vorgesehen, dass für zumindest zwei verschiedene Parkbereiche jeweils bei einem ersten Einparken der Parkbereich mit zugehörigen ausgewählten und abgespeicherten Objekten als Informationscluster nutzerseitig und somit nutzerindividuell charakterisiert wird und dass vor dem wiederkehrenden Einparken durch einen Fahrzeugnutzer aus den abgespeicherten Informationsclustern dasjenige ausgewählt wird, welches zu dem für das nachfolgend gewünschte wiederkehrende Einparken vorgesehenen Parkbereich gehört, und zum wiederkehrenden Einparken abhängig, insbesondere von einem Vorhandensein von ausgewählten und abgespeicherten Objekten dieses Informationsclusters ein aktueller erfasster Parkbereich als dieser Parkbereich beim ersten Einparken erkannt wird. Hat der Fahrzeugnutzer somit beispielsweise einen ersten Parkbereich mit charakteristischen Umfeldinformationen und somit ausgewählten und abgespeicherten Objekten festgelegt, der einen Parkplatz in seinem privaten Grundstück, und somit dort wo er wohnt, betrifft, und zumindest ein weiteres Informationscluster, welches den Parkbereich an seinem Arbeitsplatz charakterisiert, so kann er dann, wenn er beispielsweise von der Arbeit nach Hause fährt oder aus dem Urlaub nach Hause kommt, dasjenige Informationscluster auswählen, welches den Heim-Parkbereich charakterisiert. Dadurch muss das System nicht in einer möglicherweise Vielzahl von abgespeicherten Informationsclustern suchen und permanent vergleichen, ob ein aktuell erfasster Parkbereich irgendeinem der durch die Informationscluster charakterisierten abgespeicherten Parkbereichen entsprechen könnte. Der Bestimmungs- und Erkennungsaufwand ist dadurch deutlich reduziert und die Fehlerquote, einen Parkbereich nicht korrekt zu erfassen oder gegebenenfalls einen Widerspruch über ein falsches Erkennen zu erreichen, reduziert.

Es kann in dem Zusammenhang dann auch vorgesehen sein, dass dann, sobald das System aus den ermittelten Umfeldinformationen des Kraftfahrzeugs dieses Informationscluster wiedererkennt, es dem Fahrzeugnutzer die Übernahme des Parkvorgangs und somit das Einparken anbietet und der Fahrzeugnutzer insbesondere dieses Anbieten entsprechend noch bestätigt, so dass dann das Durchführen des wiederkehrenden Einparkens im Parkbereich zumindest semi-autonom gestartet wird.

Bei einer vorteilhaften Ausführungsform wird nach dem Erkennen des aktuellen Parkbereichs als der Parkbereich beim ersten Einparken dem Fahrzeugnutzer das Einparken in den aktuellen Parkbereich somit angeboten und das Einparken in eine Parkzone des Parkbereichs wird erst dann gestartet, wenn der Fahrzeugnutzer dieses Einparken bestätigt hat.

Bei einer vorteilhaften Ausführung wird bei einem ausgewählten Objekt der ersten Objektkategorie die Art des Objekts und/oder der Typ einer Art des Objekts und/oder die Position des Objekts zu einer Parkzone des Parkbereichs abgespeichert. Zusätzlich oder anstatt dazu wird bei einem ausgewählten Objekt der zweiten Objektkategorie die Art des Objekts und/oder der Typ einer Art des Objekts und/oder die Position des Objekts zu einer Parkzone des Parkbereichs abgespeichert. Dadurch kann die Objektauswahl präzisiert werden und das Erkennen bei einem gewünschten nachfolgenden wiederkehrenden Einparken präzisiert und erhöht werden.

Bezüglich eines beispielhaften Typs kann bei einer beispielsweise Bäume entsprechenden Art von unbewegbaren Objekten als erster Typ ein Nadelbaum und als zweiter Typ ein Laubbaum angesehen werden. Da gerade diese spezifischen Baumtypen in den unterschiedlichen Jahreszeiten unterschiedlich aussehen - der Nadelbaum verändert sich unwesentlich, wohingegen der Laubbaum durch Abwurf der Blätter sich deutlich verändert - können dazu individuelle Informationen abgespeichert werden. Entsprechendes kann auch dann bei Sträuchern oder dergleichen vorgesehen sein. Auch hier sind die genannten konkreten Beispiele nicht abschließend zu verstehen und können in vielfältigster Weise ergänzt werden.

Des Weiteren betrifft die Erfindung auch ein Parkassistenzsystem für ein Fahrzeug, mit einer Erfassungseinrichtung zum Erfassen eines Umgebungsbereichs des Fahrzeugs. Das Parkassistenzsystem umfasst darüber hinaus auch noch eine Auswerteeinheit. Das Parkassistenzsystem ist zum Durchführen eines erfindungsgemäßen Verfahrens oder einer vorteilhaften Ausgestaltung davon ausgebildet.

Bezüglich der bereits oben genannten Prioritätenliste für bewegbare Objekte und/oder unbewegbare Objekte als auch für Arten und/oder Typen von Arten von entsprechenden Objekten kann zusätzlich oder anstatt dazu auch eine Gewichtung vorgenommen werden. Es kann insbesondere vorgesehen sein, dass bewegbare Objekte eine höhere Gewichtung bezüglich des Aussagewerts, ob eine Erfassung eines aktuellen Parkbereichs dem Parkbereich beim ersten Einparken entspricht, aufweisen, als für eine Gewichtung für unbewegbare Objekte. Dies ist im Hinblick auf den Hintergrund, dass eine Wahrscheinlichkeit, dass sich ein bewegbares Objekt im Unterschied zu dem ersten Einparken bewegt oder entfernt größer ist, als dies für ein unbewegbares Objekt der Fall ist. Eine derartige Gewichtung kann auch in die Wahrscheinlichkeit und somit den Aussagewert einfließen. So kann es dann auch vorgesehen sein, dass dann, wenn eine Mehrzahl von bewegbaren Objekten als auch eine Mehrzahl von unbewegbaren Objekten ausgewählt und abgespeichert wurden und den Parkbereich beim ersten Einparken charakterisieren, bei einem dann für ein wiederkehrendes Einparken erfolgenden Erkennen von beispielsweise allen bewegbaren Objekten aber einem Fehlen eines unbewegbaren Objekts dann auch eine Zusatzprüfung durchgeführt wird. Dies bedeutet, dass dann zunächst mit einem entsprechenden Aussagewert, der größer einem Aussagegrenzwert ist, angenommen wird, dass es sich bei dem aktuellen Parkbereich um den beim ersten Einparken vorliegenden Parkbereich handelt, dennoch zur Erhöhung dieser Vermutung eine entsprechende Zusatzprüfung oder Verifikation erfolgt. Dies kann dahingehend der Fall sein, dass dann zunächst mit dem Einparken begonnen wird, jedoch anhand weiterer Kriterien dann überprüft wird, ob es sich tatsächlich um den Parkbereich beim ersten Einparken handelt. Dazu können insbesondere Informationen herangezogen werden, die eine Fahrtrajektorie betreffen, wie sie beim ersten Einparken bis hin zur Parkzone und somit bis zum Erreichen der Zielposition aufgezeichnet wurden. So kann in dem Zusammenhang beispielsweise eine Fahrstrecke und/oder die Anzahl von Lenkeinschlägen und/oder die Größe eines Lenkwinkels berücksichtigt werden. Dies kann fortlaufend und kontinuierlich überprüft werden. Je mehr Übereinstimmung dann bezüglich einer von möglichen Parktrajektorien und diesbezüglich aufgezeichneten Fahrdaten und den dann aktuellen Fahrdaten beim wiederkehrenden Einparken auftritt, umso mehr wird die Wahrscheinlichkeit erhöht, dass es sich bei dem aktuellen Parkbereich, in dem dann bereits wiederkehrend eingeparkt wird, es sich auch um den Parkbereich beim ersten Einparken handelt. Die oben genannte angesprochene Zusatzprüfung kann nicht nur bei dem oben genannten Fall, dass alle dynamischen bzw. bewegbaren Objekte vorhanden sind und beispielsweise ein statisches bzw. unbewegbares Objekt fehlt, angewendet werden. Dies kann somit dann auch bei anderen Situationen, bei denen auch bewegbare Objekte fehlen und/oder abhängig davon wie viele derartige bewegbare und/oder wie viele derartige unbewegbare Objekte fehlen, durchgeführt werden. Auch kann diese Zusatzprüfung dann abhängig davon erfolgen, welche Art von Objekten und/oder abhängig welcher Typ einer Art eines Objekts fehlt.

Unabhängig von der Aufteilung der Anzahl von ausgewählten und abgespeicherten bewegbaren Objekten sowie einer Anzahl von unbewegbaren abgespeicherten und ausgewählten Objekten kann in dem Zusammenhang die Summe daraus und somit eine gesamte Anzahl k von Objekten der ersten Objektkategorie und der zweiten Objektkategorie ausgewählt und abgespeichert werden, und bei einem, für ein nachfolgendes wiederkehrendes Einparken nachfolgend Erkennen von maximal k-1 Objekten, ein Aussagewert dafür bestimmt werden, mit welcher Wahrscheinlichkeit der aktuelle Parkbereich dem Parkbereich beim ersten Einparken entspricht. Es kann somit unabhängig davon, ein oder mehrere bewegbare Objekte und/oder abhängig davon ob ein oder mehrere unbewegbare Objekte fehlen übergeordnet grundsätzlich anhand von der Anzahl der überhaupt fehlenden Objekt eine weitere Beurteilung und eine Bestimmung eines Aussagewerts erfolgen.

Ein weiterer unabhängiger Aspekt der Erfindung betrifft auch ein Verfahren zum wiederkehrenden Einparken eines Fahrzeugs in einen Parkbereich, bei welchem bei einem ersten Einparken in den Parkbereich Umgebungsinformationen des Parkbereichs mit einer Erfassungseinrichtung des Fahrzeugs erfasst werden. Bei diesem weiteren unabhängigen Aspekt ist vorgesehen, dass ein Fahrzeugnutzer aus den angezeigten Umfeldinformationen zumindest ein Objekt aus einer ersten Objektkategorie als den Parkbereich charakterisierende Umfeldinformation auswählt, welches bei einer nachfolgenden Beurteilung, ob zum wiederkehrenden Einparken ein aktuell erfasster Parkbereich als der Parkbereich beim ersten Einparken erkannt wird, berücksichtigt wird, und ein Fahrzeugnutzer aus den angezeigten Umfeldinformationen zumindest ein Objekt aus einer zur ersten unterschiedlichen zweiten Objektkategorie auswählt, welches bei einer nachfolgenden Beurteilung ob zum wiederkehrenden Einparken ein aktuell erfasster Parkbereich als der Parkbereich beim ersten Einparken erkannt wird, auch dann nicht berücksichtigt wird, wenn es erfasst wird. Damit kann nutzerseitig festgelegt werden, welche Objekte im Umgebungsbereich im Hinblick auf ein wiederkehrendes Erkennen kritisch wären, da sie sich beispielsweise schwer detektieren lassen und/oder aufgrund von einem Jahreszeitenwechsel sich verändern und somit dauerhaft nicht gleich detektiert werden können. Ebenso ist es dann auch möglich, dass Objekte, die reversibel entfernt werden können, bei einem wiederkehrenden Einparken nicht vorhanden sind und somit nicht erkannt werden würden. Um in derartigen Fällen dann nicht fälschlich einen aktuellen Parkbereich als nicht denjenigen zu kategorisieren, der dem Parkbereich beim ersten Einparken entspricht, kann dem vorher entgegengewirkt werden. Indem diesbezüglich derartig kritische Objekte selektiert und für einen Erkennungsprozess ausgenommen werden, kann das Erkennungssystem und somit auch das Parkassistenzsystem entsprechend unterstützt und intelligent ausgestaltet werden. Es wird somit dann im nachfolgenden Erkennen für ein wiederkehrendes Einparken auch derartige ausgeschlossene Objekte für eine Beurteilung nicht berücksichtigen, wenn sie erfasst wurden. Der Beurteilungsprozess kann in dem Zusammenhang nicht nur sicherer und genauer, sondern auch schneller erfolgen, da die zu überprüfenden Objekte und somit die erfassten Umfeldinformationen reduziert werden können.

Es kann bei einem weiteren unabhängigen Aspekt der Erfindung auch ein Verfahren vorgesehen sein, das zum wiederkehrenden Einparken eines Fahrzeugs in einen Parkbereich ausgebildet ist, bei welchem bei einem ersten Einparken in den Parkbereich Umgebungsinformationen des Parkbereichs mit einer Erfassungseinrichtung des Fahrzeugs erfasst werden. Ein zentraler Gedanke dieses unabhängigen Aspekts ist darin zu sehen, dass ein Fahrzeugnutzer aus den angezeigten Umfeldinformationen zumindest eine und somit nutzerindividuell, den Parkbereich charakterisierende Umfeldinformation auswählt, insbesondere auf einer Anzeigeeinheit, wobei die ausgewählte charakteristische Umfeldinformation und eine beim ersten Einparken vorgesehene Zielposition des Fahrzeugs in dem Parkbereich abgespeichert werden und für ein auf das erste Einparken wiederkehrendes weiteres Einparken der Parkbereich anhand der abgespeicherten Umfeldinformation automatisch wiedererkannt wird und das Fahrzeug dann in die Zielposition bewegt wird, insbesondere zumindest semi-autonom dorthin bewegt wird.

Durch die Erfindung wird es auch ermöglicht, dass selbst dann, wenn nicht alle ausgewählten und abgespeicherten Objekte bei einem für ein wiederkehrendes Einparken durchgeführten Erkennungsprozess für einen Parkbereich erkannt werden, dennoch dieser aktuelle Parkbereich als der Parkbereich beim ersten Einparken beurteilt werden kann. Insbesondere ist dies abhängig davon, welche Objekte einer Objektkategorie fehlen. So wird mit dem erfindungsgemäßen Verfahren auch erreicht, dass insbesondere dann, wenn nicht alle Objekte einer zweiten Objektkategorie, insbesondere einer derartigen zweiten Objektkategorie, in welcher bewegbare Objekte kategorisiert werden, erfasst werden, dennoch der Parkbereich als der Parkbereich beim ersten Einparken beurteilt werden kann. Dies ist insbesondere dem Umstand geschuldet, dass nunmehr durch die Erfindung auch ganz klar unterschieden werden kann, inwieweit verschiedene Objekte Einfluss auf das Wiedererkennen haben können, da sie sich verändern können und/oder vorhanden oder nicht vorhanden sein können, da sie sich reversibel positionell verändern können. Diesem Umstand geschuldet und den somit auch im täglichen Leben auftretenden Situationen, dass sich ein Parkbereich individuell verändern kann und dennoch durch das menschliche Abstraktionsvermögen dann durch den Fahrzeugnutzer selbst ein Parkbereich erkannt wird, ist dieses nunmehr auf das System übertragen und somit eine entsprechende Intelligenz und Abstraktionsfähigkeit dem System gelernt.

Insbesondere wird zumindest eine Anzahl k > 1, insbesondere zumindest 3, insbesondere zumindest 4, von Objekten von einem Fahrzeugnutzer ausgewählt. Insbesondere wird diese Anzahl k als Systemvoraussetzung vorgegeben, um ein Wiedererkennen eines Parkbereichs mit ausreichender Sicherheit und Genauigkeit zu ermöglichen. Die Anzahl k setzt sich aus einer Anzahl m von Objekten der ersten Objektkategorie und einer Anzahl n von Objekten der zweiten Objektkategorie zusammen. Falls keine Objekte von einer der Objektkategorien vorhanden sind oder nicht detektiert wurden, werden insbesondere alle k Objekte aus einer vorhandenen und detektierten Objektkategorie ausgewählt. Somit werden beispielsweise nur Objekte der ersten Objektkategorie ausgewählt, wenn keine Objekte einer zweiten Objektkategorie vorhanden sind. Umgekehrt werden nur Objekte einer zweiten Objektkategorie ausgewählt, wenn keine Objekte der ersten Objektkategorie vorhanden sind.

Es kann dann auch vorgesehen sein, dass die Anzahl k erhöht wird, wenn nur Objekte einer bestimmten Objektkategorie, beispielsweise der zweiten Objektkategorie vorhanden sind. Dadurch kann die Erkennungswahrscheinlichkeit erhöht werden. Denn sind die Objekte der zweiten Objektkategorie beispielsweise bewegbare Objekte, so ist die Wahrscheinlichkeit, dass ein derartiges Objekt bei einem Erkennungsvorgang für ein wiederkehrendes Einparken auch nicht vorhanden sein kann, größer als beispielsweise bei einem unbewegbaren Objekt. Daher ist es bei derartigen Situationen dann vorteilhaft, wenn die Anzahl k größer vorgegeben wird, als beispielsweise bei Situationen, bei denen nur Objekte, insbesondere unbewegbare Objekte, der ersten Objektkategorie vorhanden sind, da dann die Wahrscheinlichkeit vergrößert wird, dass bei einem Erkennen für ein wiederkehrendes Einparken auch eine ausreichend hohe Mehrzahl dieser Objekte der zweiten Objektkategorie vorhanden ist und auch dann eine ausreichende Wahrscheinlichkeit erreicht wird, mit welcher der aktuelle Parkbereich als der beim ersten Einparken gegebene Parkbereich beurteilt wird.

Weitere Merkmale der Erfindung ergeben sich aus den Ansprüchen.

Ausführungsbeispiele der Erfindung werden nachfolgend anhand schematischer Zeichnungen näher erläutert. Dabei zeigen:
- Fig. 1: eine schematische Darstellung eines Ausführungsbeispiels eines erfindungsgemäßen Verfahrens; und
- Fig. 2: ein vereinfachtes Ablaufdiagramm eines Ausführungsbeispiels eines erfindungsgemäßen Verfahrens.

In den Figuren werden gleiche oder funktionsgleiche Elemente mit den gleichen Bezugszeichen versehen.

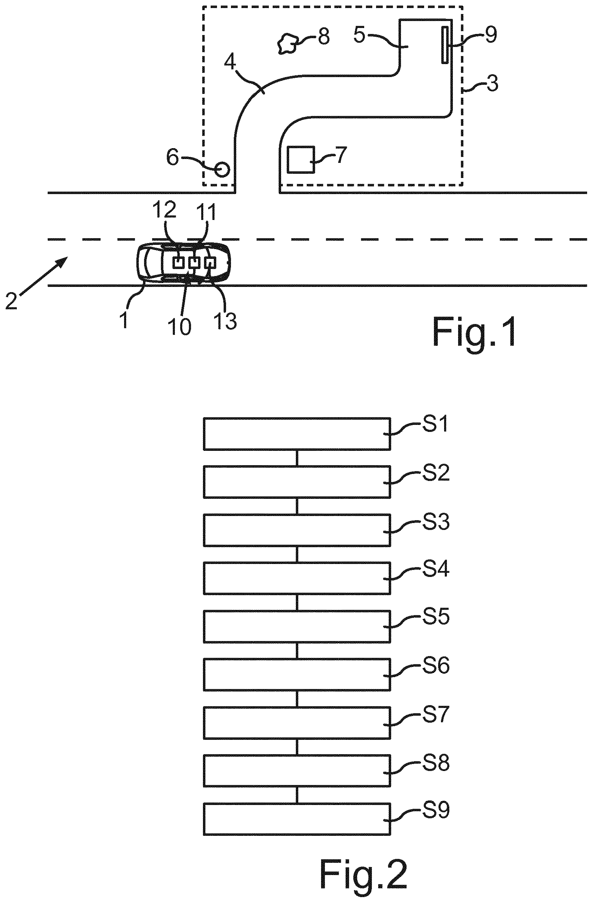

In Fig. 1 ist in einer einfachen Draufsichtdarstellung eine Verkehrssituation gezeigt. Ein Fahrzeug 1 in Form eines Kraftfahrzeugs bewegt sich auf einer Fahrbahn 2. Im Ausführungsbeispiel ist angrenzend an die Fahrbahn 2 ein Parkbereich 3 ausgebildet. Der Parkbereich 3 umfasst hier insbesondere einen Weg 4 und eine Parkzone 5. Benachbart zu dem Weg 4 ist beispielsweise im Bereich einer Einmündung an die Fahrbahn 2 ein bewegbares Objekt 6 sowie ein unbewegbares Objekt 7 positioniert. Darüber hinaus ist im Parkbereich 3 beispielsweise beabstandet zu dem Weg 4 und weiter entfernt zur Fahrbahn 2 beispielsweise ein weiteres unbewegbares Objekt 8 angeordnet. Darüber hinaus ist beispielsweise angrenzend an die Parkzone 5 beispielsweise ein bewegbares Objekt 9 positioniert.

Es ist darauf hinzuweisen, dass die Ausgestaltung des Parkbereichs 3 mit dem Weg 4 und der Parkzone 5 im Hinblick auf Lage und Formgebung ebenso beispielhaft und nicht einschränkend zu verstehen ist, wie die Position und Anzahl der Objekte 6 bis 9.

Das Fahrzeug 1 umfasst ein Parkassistenzsystem 10, welches eine Erfassungseinrichtung 11 und eine Auswerteeinheit 12 aufweist. Insbesondere umfasst die Erfassungseinrichtung 11 zumindest ein Kamerasystem mit zumindest einer Kamera.

Darüber hinaus umfasst das Parkassistenzsystem 10 eine Anzeigeeinheit 13.

Bezüglich eines Ausführungsbeispiels eines erfindungsgemäßen Verfahrens wird ein Einparken des Fahrzeugs 1 in den Parkbereich 3 und dort insbesondere in die Parkzone 5 durchgeführt. Es ist vorgesehen, dass der Umgebungsbereich des Fahrzeugs 1 bei diesem ersten Einparken mit der Erfassungseinrichtung 11 erfasst wird und in dem Zusammenhang Umgebungsinformationen detektiert werden. Dieses Erfassen der Umgebungsinformationen kann automatisch erfolgen oder in vorteilhafter Weise durch einen Fahrzeugnutzer gestartet werden. Das Fahrzeug 1 fährt dann in den Parkbereich 3 ein, bis es an der Parkzone 5 eine Zielposition erreicht hat. Dies wird gemäß einem Schritt S2 durchgeführt, nachdem gemäß einem Schritt S1 das Erfassen der Umgebungsinformationen erfolgt.

Auf der Anzeigeeinheit 13 wird gemäß einem Schritt S3 dann der Parkbereich 3 mit den detektierten Umgebungsinformationen angezeigt. Im Ausführungsbeispiel wird dazu vorzugsweise der Weg 4, die Parkzone 5 und die Objekte 6 bis 9 angezeigt. Dies kann in einer Draufsichtdarstellung oder in einer perspektivischen Ansicht erfolgen. Hierzu kann auch ein Umschalten der jeweiligen Ansichten ermöglicht sein.

Die Anzeigeeinheit 13 ist zumindest bereichsweise als berührsensitives Bedienfeld ausgebildet.

Ein Fahrzeugnutzer kann dann zumindest ein Objekt 6 bis 9 als charakteristische Umfeldinformation auswählen und abspeichern.

Im Ausführungsbeispiel kann vorgesehen sein, dass der Fahrzeugnutzer das bewegbare Objekt 6 und/oder das bewegbare Objekt 9 auswählt. Zusätzlich oder anstatt dazu kann vorgesehen sein, dass der Fahrzeugnutzer das unbewegbare Objekt 7 und/oder das unbewegbare Objekt 9 auswählt.

Für die weitere Erläuterung wird bei einem vorteilhaften Ausführungsbeispiel vorgesehen, dass der Fahrzeugnutzer alle Objekte 6 bis 9 markiert bzw. auswählt und diese somit dann auch abgespeichert werden. Die Auswahl erfolgt in dem Zusammenhang gemäß einem Schritt S4 und das Abspeichern in einer Datenbank gemäß einem Schritt S5. Vorzugsweise wird vorgesehen, dass auch die erreichte Zielposition des Fahrzeugs 1 beim ersten Einparken in der Parkzone 5 abgespeichert wird. Dadurch wird ein Informationscluster mit den ausgewählten und abgespeicherten Objekten und der Zielposition erstellt. Vorzugsweise wird dieses Informationscluster als Umfeldkarte abgespeichert.

Insbesondere wird der Parkbereich 3 auch als Umfeldkarte durch die Anzeigeeinheit 13 angezeigt.

Verlässt das Fahrzeug 1 dann im Weiteren den Parkbereich 3 wieder und möchte dann im Weiteren nachfolgend irgendwann wieder in den Parkbereich 3 einparken, so wird ein derartiges wiederkehrendes Einparken durchgeführt, wenn der Parkbereich 3 erkannt wird.

Dazu ist es dann in vorteilhafterweise gemäß einem Schritt S6 vorgesehen, dass zunächst ein Fahrzeugnutzer ein gewünschtes Wiedereinparken in den Parkbereich 3 vorgibt. Dazu wird insbesondere das zugehörige Informationscluster aus der Datenbank ausgewählt. Insbesondere ist dies dann vorteilhaft, wenn eine Mehrzahl von derartigen Informationsclustern für mehrere, unterschiedliche Parkbereiche abgespeichert ist. Es kann jedoch insbesondere auch vorgesehen sein, dass diese Auswahl getroffen wird, wenn nur ein derartiger Parkbereich mit einem zugehörigen Informationscluster in der Datenbank abgespeichert ist.

Dies kann vorzugsweise auch durch Auswählen auf der berührsensitiven Bedienoberfläche bzw. dem berührsensitiven Bedienfeld der Anzeigeeinheit 13 durchgeführt werden.

Insbesondere wird automatisch mit einem derartigen Auswählen eines Informationsclusters durch den Fahrzeugnutzer dann auch ein Suchmodus bzw. ein Erkennungsmodus der Erfassungseinrichtung 11 aktiviert. Dies bedeutet, dass bei der Erfassung des Umgebungsbereichs gezielt nach den ausgewählten und abgespeicherten Objekten dieses Informationsclusters gesucht wird.

Befindet sich dann das Fahrzeug 1 bei einem gewünschten wiederkehrenden Einparken in den Parkbereich 3 in einer Position, bei welcher zumindest eines der abgespeicherten Objekte 6 bis 9 erkannt wird, so kann anhand von einem bestimmten Aussagewert die Wahrscheinlichkeit bestimmt werden, mit welcher der aktuell detektierte Parkbereich dann diesem beim ersten Einparken charakterisierten Parkbereich 3 entspricht. Vorzugsweise wird dieser Aussagwert umso höher, je mehr Objekte der ausgewählten und abgespeicherten Objekte erkannt werden.

Es wird aufgrund der Anzahl der Objekte und/oder der Art und/oder des Typs einer Art eines Objekts und/oder abhängig von der Position eines Objekts im Parkbereich 3 zu einer Parkzone 5 und/oder abhängig von einer Position eines Objekts zu einer Fahrbahn 2 der Aussagewert erhöht oder erniedrigt. Sind die ausgewählten und abgespeicherten Objekte so positioniert, insbesondere im Parkbereich 3 relativ zur Parkzone 5 und/oder zur Fahrbahn 2, dass sie alle praktisch gleichzeitig erfasst werden können, insbesondere auch dann, wenn das Fahrzeug 1 noch außerhalb des Parkbereichs 3 ist, so kann der Parkbereich 3 relativ schnell erkannt werden bzw. relativ schnell und eindeutig detektiert werden und beurteilt werden, ob dieser aktuelle Parkbereich 3 dem Parkbereich beim ersten Einparken entspricht.

Ist eine Situation gegeben, bei welcher aufgrund der Komplexität des Parkbereichs 3 eine derartige relativ gleichzeitige Erfassung der ausgewählten und abgespeicherten Objekte nicht möglich ist, so kann bevorzugterweise allgemein auch vorgesehen sein, dass der Fahrzeugnutzer eine Reihenfolge einer zeitlich nacheinander möglichen Detektion von Objekten 6 bis 9 beim Auswählen und Abspeichern der Objekte für ein Informationscluster ebenfalls zusätzlich bestimmen kann, insbesondere kann dies beim Auswählen beim ersten Einparken erfolgen. Dies führt dann bevorzugt dazu, dass beispielsweise bei dem Ausführungsbeispiel in Fig. 1 zunächst die Objekte 6 und 7 relativ gleichzeitig erfasst werden können und wenn diese erkannt werden zunächst bereits mit einer gewissen Aussagewahrscheinlichkeit der aktuell detektierte Parkbereich als möglicher Parkbereich beim ersten Einparken beurteilt wird, obwohl weitere, ausgewählte und abgespeicherte Objekte 8 und 9 noch nicht erfasst wurden. Dies kann auch dann vorgesehen sein, wenn beispielsweise das bewegbare Objekt 6 bei einem Beurteilungsprozess für ein wiederkehrendes Einparken dann aktuell nicht vorhanden ist oder bezüglich der ursprünglichen örtlichen Position beispielsweise zum Weg 4 etwas dazu verschoben ist oder in einer geringfügigen anderen Position dazu angeordnet ist. Ist hingegen das unbewegbare Objekt 7 nicht vorhanden, so ist mit in dem Zusammenhang höherer Wahrscheinlichkeit davon auszugehen bzw. insbesondere auszuschließen, dass der aktuell detektierte Bereich 3 dem Parkbereich 3 beim ersten Einparken entspricht. Somit wird praktisch die Gewichtung einer Detektion oder Nichtdetektion und somit einem insbesondere Vorhandensein oder Nichtvorhandensein von bewegbaren und unbewegbaren Objekten unterschiedliche Bedeutung zugegeben bzw. zugemessen.

Wird dann ausgehend von einem ausreichenden Aussagewert, der größer einem Aussagegrenzwert ist, der aktuelle Parkbereich 3 als der beim ersten Einparken gegebene Parkbereich 3 vermutet, wird dem Fahrzeugnutzer das Einparken in diesen Parkbereich 3 angeboten. Insbesondere ist vorgesehen, dass auf diesen Anbietungssschritt S7 folgend dann zunächst gemäß dem Schritt S8 eine Bestätigung dieses Einparkens durch einen Fahrzeugnutzer erfolgen muss, bis das Fahrzeug 1 dann zumindest semi-autonom in den Parkbereich 3 einfährt.

Auf diesem Weg kann dann durch zusätzliche Nachprüfungen bzw. Zusatzprüfungen und/oder durch im Ausführungsbeispiel vorgesehenes dann zeitlich nachfolgendes Erkennen eines Vorhandenseins des weiteren Objekts 8 dann im Nachfolgenden des weiteren Objekts 9 der Aussagewert so erhöht werden, dass es sich bei dem aktuellen Parkbereich 3 tatsächlich um den Parkbereich 3 beim ersten Einparken handelt.

Insbesondere wird dann vorgesehen, dass das Fahrzeug 1 gemäß einem Schritt S9 bis in die Zielposition auf der Parkzone 5 bewegt wird.

Es kann vorgesehen sein, dass das Verbringen des Fahrzeugs 1 in die Zielposition 5 ohne weitere Kontrolle durchgeführt wird, sobald eine Mindestanzahl von Objekten detektiert wurde, die auch ausgewählt waren, insbesondere dann, wenn alle Objekte 6 bis 9 detektiert wurden.

Es kann alternativ auch vorgesehen sein, dass zumindest phasenweise, insbesondere über den gesamten Parkvorgang, das Einparken überwacht wird und eine individuelle Fahrtrajektorie bestimmt wird, so dass dann das Fahrzeug 1 in der Parkzone 5 an eine Zielposition gebracht wird. Diese Zielposition kann dann die vorzugsweise beim ersten Einparken abgespeicherte Zielposition sein, kann jedoch dann auch eine davon abweichende aktuelle Zielposition sein.

Die in den Ausführungsbeispielen gemäß Fig. 1 und Fig. 2 genannten konkreten Möglichkeiten und Alternativen sind nicht abschließend zu verstehen. Es darf auch an dieser Stelle nochmals auf die Ausführungen vor der Figurenbeschreibung verwiesen werden, in denen noch weitere Alternativen und Kombinationsmöglichkeiten genannt sind. Abhängig von der jeweiligen Situation, wie ein Parkbereich ausgestaltet ist und/oder wie seine Lage zu einer aktuellen Position des Fahrzeugs ist, können sich vielfältigste Ausgestaltungen ergeben, welche und wie viel Objekte detektiert werden und von einem Nutzer individuell als charakterisierende Umfeldinformationen ausgewählt und abgespeichert werden. Abhängig davon können sich auch wieder, wie in einigen Ausführungsbeispielen erläutert und angedeutet, verschiedenste Szenarien ergeben, um einen aktuellen Parkbereich auch als den beim ersten Einparken vorhandenen Parkbereich 3 zu erkennen. Dies kann unverzüglich anhand eines Erkennungsvorgangs, in dem alle ausgewählten und abgespeicherten Objekte dann auch erkannt werden, erfolgen, es kann jedoch auch ein diesbezüglich zeitliches Nacheinanderdetektieren erfolgen. Auch können sich hier dann ausgehend von einem ersten Aussagewert Erhöhungen dieses Aussagewert ergeben, wenn im laufenden Weiterbewegen des Fahrzeugs an den Parkbereich heran oder bereits im Parkbereich drin weitere Bestätigungen der Richtigkeit des Parkbereichs durch zusätzliches Erkennen von ausgewählten und abgespeicherten Objekten ergibt.

Darüber hinaus ist es insbesondere auch ermöglicht, dass sich ein ändernder Parkbereich 3, der sich im Vergleich zu einem ersten bzw. einem vorhergehenden Einparken geändert hat, beispielsweise im Hinblick auf den Ort und/oder die Anzahl von ausgewählten und abgespeicherten Objekten und/oder im Hinblick auf den Verlauf eines Wegs 4 und/oder im Hinblick auf die Ausgestaltung einer Parkzone 5, angepasst wird. Dazu kann ein Fahrzeugnutzer dann wiederum einen Lernmodus aktivieren, in dem dann aktualisiert wiederum individuell vom Fahrzeugnutzer ausgewählte Objekte vorgesehen werden und abgespeichert werden.

Darüber hinaus ist es auch möglich, dass die Erfassungseinrichtung 11 selbst eine örtliche und/oder formmäßige und/oder optisch unterschiedliche Erscheinung eines noch vorhandenen Objekts 6 bis 9 im Vergleich zu der Position und/oder Größe und/oder optischen Ausgestaltung beim ersten Einparken erkennt und dem Fahrzeugnutzer automatisch diese Abweichung eines Objekts 6 bis 9 im Hinblick auf die aktuelle Situation im Vergleich zur Situation beim ersten Einparken anzeigt und anbietet, dass dieses aktuelle Objekt dann in der geänderten Ausgestaltung neu ausgewählt und abgespeichert wird. Dadurch wird der Fahrzeugnutzer intelligent durch das System selbst unterstützt, was insbesondere dann vorteilhaft ist, wenn der Fahrzeugnutzer eine Mehrzahl von Objekten in einem Informationscluster ausgewählt und abgespeichert hat und sich diesbezüglich nicht mehr explizit daran erinnert, welche derartigen Objekte und in welcher Ausgestaltung er diese Objekte beim ersten Einparken ausgewählt und abgespeichert hat.

## Patentansprüche

1. Verfahren zum wiederkehrenden Einparken eines Fahrzeugs (1) in einen Parkbereich (3), bei welchem bei einem ersten Einparken in den Parkbereich (3) Umgebungsinformationen des Parkbereichs (3) mit einer Erfassungseinrichtung (11) des Fahrzeugs (1) erfasst werden, wobei bei dem ersten Einparken die Umgebungsinformationen auf einer Anzeigeinheit (13) angezeigt werden,
wobei ein Fahrzeugnutzer aus den angezeigten Umfeldinformationen zumindest ein Objekt (6, 9) aus einer ersten Objektkategorie als den Parkbereich (3) charakterisierende Umfeldinformation auswählt und/oder aus den angezeigten Umfeldinformationen zumindest ein Objekt (7, 8) aus zumindest einer zur ersten unterschiedlichen zweiten Objektkategorie als den Parkbereich (3) charakterisierende Umfeldinformation auswählt, wobei die ausgewählten Objekte (6 bis 9) abgespeichert werden und zum wiederkehrenden Einparken abhängig von ausgewählten und abgespeicherten Objekten (6 bis 9) ein aktuell erfasster Parkbereich als der Parkbereich (3) beim ersten Einparken erkannt wird,
**dadurch gekennzeichnet, dass**
beim ersten Einparken in den Parkbereich (3) zumindest ein ortsfestes unbewegbares Objekt (7, 8) angezeigt wird und dieses Objekt (7, 8) durch Auswählen der ersten Objektkategorie zugeordnet wird,
wobei eine Anzahl m von Objekten (7, 8) der ersten Objektkategorie ausgewählt und abgespeichert wird, und bei einem, für ein nachfolgendes wiederkehrendes Einparken nachfolgenden Erkennen von maximal m-1 Objekten (7, 8) der ersten Objektkategorie ein Aussagewert dafür bestimmt wird, mit welcher Wahrscheinlichkeit der aktuelle Parkbereich dem Parkbereich (3) beim ersten Einparken entspricht.

2. Verfahren nach Anspruch 1,
**dadurch gekennzeichnet, dass**
beim ersten Einparken in den Parkbereich (3) zumindest ein bewegbares Objekt (6, 9) angezeigt wird und dieses Objekt (6, 9) durch Auswählen der zweiten Objektkategorie zugeordnet wird.

3. Verfahren nach Anspruch 2,
**dadurch gekennzeichnet, dass**
eine Anzahl n von Objekten (6, 9) der zweiten Objektkategorie ausgewählt und abgespeichert wird, und bei einem, für ein nachfolgendes wiederkehrendes Einparken nachfolgenden Erkennen von maximal n-1 Objekten (6, 9) der zweiten Objektkategorie ein Aussagewert dafür bestimmt wird, mit welcher Wahrscheinlichkeit der aktuelle Parkbereich dem Parkbereich (3) beim ersten Einparken entspricht, insbesondere der Aussagewert abhängig von der Anzahl der fehlenden Objekte (6, 9) und/oder abhängig von der Art der fehlenden Objekte (6, 9) und/oder abhängig vom Typ einer Art der fehlenden Objekte (6, 9) bestimmt wird.

4. Verfahren nach Anspruch 2 oder 3,
**dadurch gekennzeichnet, dass**
bei einem, für ein nachfolgendes wiederkehrendes Einparken nachfolgenden Erkennen eines Objekts (6, 9) der zweiten Objektkategorie an einer zu der Position beim ersten Einparken unterschiedlichen Position und/oder bei einer Veränderung einer Anzahl von Objekten an einer Position eines ausgewählten Objekts (6, 9) der zweiten Kategorie ein Aussagewert dafür bestimmt wird, mit welcher Wahrscheinlichkeit der aktuelle Parkbereich dem Parkbereich (3) beim ersten Einparken entspricht, wobei der Aussagewert abhängig von der Größe der Positionsänderung und/oder abhängig von der Anzahl der zusätzlichen Objekte an der Position bestimmt wird.

5. Verfahren nach einem der vorhergehenden Ansprüche,
**dadurch gekennzeichnet, dass**
als den Parkbereich (3) charakterisierende Objekte (6 bis 9) diejenigen Objekte außerhalb einer Parkzone (5) des Parkbereichs (3) ausgewählt werden.

6. Verfahren nach einem der vorhergehenden Ansprüche,
**dadurch gekennzeichnet, dass**
das Auswählen durch Antippen auf einer berührsensitiven Bedienfläche der Anzeigeeinheit (13) durchgeführt wird.

7. Verfahren nach einem der vorhergehenden Ansprüche,
**dadurch gekennzeichnet, dass**
eine bei ersten Einparken erreichte Zielposition des Fahrzeugs (1) in einer Parkzone (5) des Parkbereichs (3) abgespeichert wird.

8. Verfahren nach Anspruch 7,
**dadurch gekennzeichnet, dass**
die Zielposition zusammen mit den abgespeicherten Objekten (6 bis 9) als Informationscluster, insbesondere als Umfeldkarte, abgespeichert wird.

9. Verfahren nach Anspruch 7 oder 8,
**dadurch gekennzeichnet, dass**
beim Erkennen des aktuell erfassten Parkbereichs als der Parkbereich (3) beim ersten Einparken das Fahrzeug (1) zumindest semi-autonom in die abgespeicherte Zielposition gebracht wird.

10. Verfahren nach einem der vorhergehenden Ansprüche,
**dadurch gekennzeichnet, dass**
für zumindest zwei verschiedene Parkbereiche jeweils bei einem ersten Einparken der Parkbereich mit zugehörigen ausgewählten und abgespeicherten Objekten als Informationscluster charakterisiert wird und das vor dem wiederkehrenden Einparken durch einen Fahrzeugnutzer aus den abgespeicherten Informationsclustern dasjenige ausgewählt wird, welches zu dem für das nachfolgend gewünschte wiederkehrende Einparken vorgesehenen Parkbereich gehört, und zum wiederkehrenden Einparken abhängig von ausgewählten und abgespeicherten Objekten dieses Informationsclusters ein aktuell erfasster Parkbereich als dieser Parkbereich beim ersten Einparken erkannt wird.

11. Verfahren nach einem der vorhergehenden Ansprüche,
**dadurch gekennzeichnet, dass**
nach dem Erkennen des aktuellen Parkbereichs als der Parkbereich (3) beim ersten Einparken dem Fahrzeugnutzer das Einparken in den aktuellen Parkbereich (3) angeboten wird und das Einparken in eine Parkzone (5) des Parkbereichs (3) erst dann gestartet wird, wenn der Fahrzeugnutzer das Einparken bestätigt hat.

12. Verfahren nach einem der vorhergehenden Ansprüche
**dadurch gekennzeichnet, dass**
beim einem ausgewählten Objekt (7, 8) der ersten Objektkategorie die Art (Baum, Mauer) des Objekts (7, 8) und/oder der Typ (Nadelbaum Laubbaum im Winter unterschiedlich, geschnitten nicht geschnitten) Hecke) einer Art des Objekts (7, 8) und/oder die Position des Objekts (7, 8) zu einer Parkzone (5) des Parkbereichs (3) und/oder einer Fahrbahn (2) außerhalb des Parkbereichs (3) abgespeichert werden und/oder bei einem ausgewählten Objekt (6, 9) der zweiten Objektkategorie die Art (Fahrrad, Anhänger, Mülltonne) des Objekts (6, 9) und/oder der Typ einer Art des Objekts (6, 9) und/oder die Position des Objekts (6, 9) zu einer Parkzone (5) des Parkbereichs (3) und/oder einer Fahrbahn (2) außerhalb des Parkbereichs (3) abgespeichert werden.

13. Parkassistenzsystem (10) für ein Fahrzeug (1), mit einer Erfassungseinrichtung (11) zum Erfassen eines Umgebungsbereichs eines Fahrzeugs (1) und mit einer Auswerteeinheit (12), welches zum Durchführen eines Verfahrens nach einem der vorhergehenden Ansprüche ausgebildet ist.

## Claims

1. Method for the recurrent parking of a vehicle (1) in a parking area (3), in which during a first parking operation into the parking area (3) surroundings information of the parking area (3) is registered with an acquisition device (11) of the vehicle (1), wherein during the first parking operation the surroundings information is displayed on a display unit (13), wherein a vehicle user selects from the displayed surroundings information at least one object (6, 9) from a first object category as surroundings information which characterizes the parking area (3) and/or selects from the displayed surroundings information at least one object (7, 8) from at least one second object category, different from the first, as surroundings information which characterizes the parking area (3), wherein the selected objects (6 to 9) are stored and, for the recurrent parking in accordance with selected and stored objects (6 to 9), a currently registered parking area is detected as the parking area (3) during the first parking operation,
**characterized in that**
during the first parking operation into the parking area (3) at least one positionally fixed, immovable object (7, 8) is displayed, and this object (7, 8) is assigned by selecting the first object category, wherein a number m of objects (7, 8) of the first object category is selected and stored, and when a maximum of m-1 objects (7, 8) of the first object category is subsequently detected for a subsequent recurrent parking operation, an informative value is determined for the probability with which the current parking area corresponds to the parking area (3) during the first parking operation.

2. Method according to Claim 1,
**characterized in that**
during the first parking operation into the parking area (3) at least one movable object (6, 9) is displayed, and this object (6, 9) is assigned by selecting the second object category.

3. Method according to Claim 2,
**characterized in that**
a number n of objects (6, 9) of the second object category is selected and stored, and when a maximum of n-1 objects (6, 9) of the second object category is subsequently detected for a subsequent recurrent parking operation, an informative value is determined for the probability with which the current parking area corresponds to the parking area (3) during the first parking operation, in particular the informative value is determined in accordance with the number of missing objects (6, 9) and/or in accordance with the class of the missing objects (6, 9) and/or in accordance with the type of a class of the missing objects (6, 9).

4. Method according to Claim 2 or 3,
**characterized in that**
when an object (6, 9) of the second object category is subsequently detected, for a subsequent recurrent parking operation, at a position which is different from the position during the first parking operation and/or when there is a change in a number of objects at a position of a selected object (6, 9) of the second category, an informative value is determined for the probability with which the current parking area corresponds to the parking area (3) during the first parking operation, wherein the informative value is determined in accordance with the magnitude of the change in position and/or in accordance with the number of additional objects at the position.

5. Method according to one of the preceding claims,
**characterized in that**
those objects which are outside a parking zone (5) of the parking area (3) are selected as objects (6 to 9) which characterize the parking area (3).

6. Method according to one of the preceding claims,
**characterized in that**
the selection is carried out by touching a touch-sensitive operator control surface of the display unit (13).

7. Method according to one of the preceding claims,
**characterized in that**
a target position of the vehicle (1) which is reached during the first parking operation, in a parking zone (5) of the parking area (3), is stored.

8. Method according to Claim 7,
**characterized in that**
the target position is stored together with the stored objects (6 to 9) as an information cluster, in particular as a map of the surroundings.

9. Method according to Claim 7 or 8,
**characterized in that**
when the currently registered parking area is detected as the parking area (3) during the first parking operation, the vehicle (1) is moved at least semi-autonomously into the stored target position.

10. Method according to one of the preceding claims,
**characterized in that**,
for at least two different parking areas, in each case the parking area with associated selected and stored objects is characterized as an information cluster during a first parking operation and the information cluster before the recurrent parking operation is stored by a vehicle user from the stored information clusters as that which is associated with the parking area which is provided for the subsequently desired recurrent parking operation, and for the recurrent parking operation a currently registered parking area is detected, in accordance with selected and stored objects of said information cluster, as this parking area during the first parking operation.

11. Method according to one of the preceding claims,
**characterized in that**,
after the detection of the current parking area as the parking area (3) during the first parking operation, the parking operation into the current parking area (3) is offered to the vehicle user, and the parking operation into a parking zone (5) of the parking area (3) is not started until the vehicle user has confirmed the parking operation.

12. Method according to one of the preceding claims,
**characterized in that**
in the case of a selected object (7, 8) of the first object category the class (tree, wall) of the object (7, 8) and/or the type (conifer, deciduous tree in the winter different, cut, not cut) hedge) of a class of the object (7, 8) and/or the position of the object (7, 8) are/is stored for a parking zone (5) of the parking area (3) and/or a travel path (2) outside the parking area (3) and/or in the case of a selected object (6, 9) of the second object category the type (motorcycle, trailer, rubbish bin) of the object (6, 9) and/or the type of a class of the object (6, 9) and/or the position of the object (6, 9) are/is stored for a parking zone (5) of the parking area (3) and/or a travel path (2) outside the parking area (3).

13. Parking assistance system (10) for a vehicle (1) having an acquisition device (11) for registering an area surrounding the vehicle (1), and having an evaluation unit (12), which system is designed to carry out a method according to one of the preceding claims.

## Revendications

1. Procédé d'entrée en stationnement récurrent d'un véhicule (1) dans une aire de stationnement (3), dans lequel des informations d'environnement de l'aire de stationnement (3) sont acquises avec un dispositif d'acquisition (11) du véhicule (1) lors d'une première entrée en stationnement dans l'aire de stationnement (3), les informations d'environnement étant affichées sur une unité d'affichage (13) lors de la première entrée en stationnement, un utilisateur du véhicule sélectionnant à partir des informations d'environnement affichées au moins un objet (6, 9) d'une première catégorie d'objets en tant qu'information d'environnement qui caractérise l'aire de stationnement (3) et/ou sélectionnant à partir des informations d'environnement affichées au moins un objet (7, 8) d'au moins une deuxième catégorie d'objets, différente de la première, en tant qu'information d'environnement qui caractérise l'aire de stationnement (3), les objets (6 à 9) sélectionnés étant mémorisés et, pour une entrée en stationnement récurrente, une aire de stationnement actuellement détectée étant reconnue comme l'aire de stationnement (3) lors de la première entrée en stationnement en fonction d'objets (6 à 9) sélectionnés et mémorisés,
**caractérisé en ce que**
lors de la première entrée en stationnement dans l'aire de stationnement (3), au moins un objet immobile (7, 8) en position fixe est affiché et cet objet (7, 8) est affecté à la première catégorie d'objets par sélection, un nombre m d'objets (7, 8) de la première catégorie d'objets étant sélectionné et mémorisé, et lors d'une reconnaissance suivante d'un maximum de m-1 objets (7, 8) de la première catégorie d'objets pour une entrée en stationnement récurrente suivante, une valeur informative étant déterminée à propos de la probabilité à laquelle l'aire de stationnement actuelle correspond à l'aire de stationnement (3) lors de la première entrée en stationnement.

2. Procédé selon la revendication 1, **caractérisé en ce que** lors de la première entrée en stationnement dans l'aire de stationnement (3), au moins un objet mobile (6, 9) est affiché et cet objet (6, 9) est affecté à la deuxième catégorie d'objets par sélection.

3. Procédé selon la revendication 2, **caractérisé en ce qu'**un nombre n d'objets (6, 9) de la deuxième catégorie d'objets sont sélectionnés et mémorisée, et lors d'une reconnaissance suivante d'un maximum de n-1 objets (6, 9) de la deuxième catégorie d'objets pour une entrée en stationnement récurrente suivante, une valeur informative est déterminée à propos de la probabilité à laquelle l'aire de stationnement actuelle correspond à l'aire de stationnement (3) lors de la première entrée en stationnement, notamment la valeur informative dépendante du nombre d'objets (6, 9) manquants et/ou dépendante de la nature des objets (6, 9) manquants et/ou dépendante du type d'une nature des objets (6, 9) manquants.

4. Procédé selon la revendication 2 ou 3, **caractérisé en ce que** lors d'une reconnaissance suivante d'un objet (6, 9) de la deuxième catégorie d'objets pour une entrée en stationnement récurrente suivante à une position différente de la position lors de la première entrée en stationnement et/ou dans le cas d'une modification d'un nombre d'objets à une position d'un objet (6, 9) sélectionné de la deuxième catégorie, une valeur informative est déterminée à propos de la probabilité à laquelle l'aire de stationnement actuelle correspond à l'aire de stationnement (3) lors de la première entrée en stationnement, la valeur informative étant déterminée en fonction de l'amplitude du changement de position et/ou en fonction du nombre d'objets supplémentaires au niveau de la position.

5. Procédé selon l'une des revendications précédentes, **caractérisé en ce que** les objets (6 à 9) sélectionnés qui caractérisent l'aire de stationnement (3) sont les objets en-dehors d'une zone de stationnement (5) de l'aire de stationnement (3).

6. Procédé selon l'une des revendications précédentes, **caractérisé en ce que** la sélection s'effectue par effleurement d'une interface de commande tactile de l'unité d'affichage (13).

7. Procédé selon l'une des revendications précédentes, **caractérisé en ce qu'**une position cible du véhicule (1) atteinte dans une zone de stationnement (5) de l'aire de stationnement (3) lors de la première entrée en stationnement est mémorisée.

8. Procédé selon la revendication 7, **caractérisé en ce que** la position cible est mémorisée conjointement avec les objets (6 à 9) mémorisés sous la forme d'une grappe d'informations, notamment sous la forme d'une carte de l'environnement.

9. Procédé selon la revendication 7 ou 8, **caractérisé en ce que** lors de la reconnaissance de l'aire de stationnement actuellement détectée comme étant l'aire de stationnement (3) lors de la première entrée en stationnement, le véhicule (1) est amené dans la position cible mémorisée d'une manière au moins semi-autonome.

10. Procédé selon l'une des revendications précédentes, **caractérisé en ce que** pour au moins deux aires de stationnement différentes, l'aire de stationnement avec les objets sélectionnés et mémorisés associés est respectivement caractérisée en tant que grappe d'informations lors d'une première entrée en stationnement et, parmi les grappes d'informations mémorisées, celle qui est sélectionnée par un utilisateur du véhicule avant l'entrée en stationnement récurrente est celle qui appartient à l'aire de stationnement prévue pour l'entrée en stationnement récurrente souhaitée suivante, et une aire de stationnement est reconnue en tant que cette aire de stationnement lors de la première entrée en stationnement en vue d'une entrée en stationnement récurrente en fonction d'objets sélectionnés et mémorisés de cette grappe d'informations.

11. Procédé selon l'une des revendications précédentes, **caractérisé en ce qu'**après la reconnaissance de l'aire de stationnement actuelle en tant qu'aire de stationnement (3) lors de la première entrée en stationnement, l'entrée en stationnement dans l'aire de stationnement (3) actuelle est proposée à l'utilisateur du véhicule et l'entrée en stationnement dans une zone de stationnement (5) de l'aire de stationnement (3) n'est démarrée que lorsque l'utilisateur du véhicule a confirmé l'entrée en stationnement.

12. Procédé selon l'une des revendications précédentes, **caractérisé en ce que** dans le cas d'un objet (7, 8) sélectionné de la première catégorie d'objets, la nature (arbre, mur) de l'objet (7, 8) et/ou le type (résineux, feuillu, différent en hiver, taillé, non taillé, haie) d'une nature de l'objet (7, 8) et/ou la position de l'objet (7, 8) par rapport à une zone de stationnement (5) de l'aire de stationnement (3) et/ou une voie de circulation (2) en-dehors de l'aire de stationnement (3) sont mémorisés et/ou dans le cas d'un objet (6, 9) sélectionné de la duexième catégorie d'objets, la nature (bicyclette, remorque, poubelle) de l'objet (6, 9) et/ou le type d'une nature de l'objet (6, 9) et/ou la position de l'objet (6, 9) par rapport à une zone de stationnement (5) de l'aire de stationnement (3) et/ou une voie de circulation (2) en-dehors de l'aire de stationnement (3) sont mémorisés.

13. Système d'aide au stationnement (10) pour un véhicule (1), comprenant un dispositif d'acquisition (11) destiné à acquérir une zone environnante d'un véhicule (1) et comprenant une unité d'interprétation (12) qui est configurée pour mettre en œuvre un procédé selon l'une des revendications précédentes.
